Europäisches Patentamt

European Patent Office

Office européen des brevets

(19)

(11) Veröffentlichungsnummer: **0 254 055**
**A2**

## (12) EUROPÄISCHE PATENTANMELDUNG

(21) Anmeldenummer: 87109017.1

(22) Anmeldetag: 23.06.87

(51) Int. Cl.4: **A01N 1/00** , A01N 61/00 , A01N 65/00 , A23B 4/00 , A61K 35/02 , A61K 35/78

(30) Priorität: 24.06.86 DE 3621084

(43) Veröffentlichungstag der Anmeldung:
27.01.88 Patentblatt 88/04

(84) Benannte Vertragsstaaten:
AT BE CH DE ES FR GB GR IT LI LU NL SE

(71) Anmelder: **Al-Yajori, Abdul Karim**
**POB 531**
**Sanaa(YE)**

(72) Erfinder: **Al-Yajori, Abdul Karim**
**POB 531**
**Sanaa(YE)**

(74) Vertreter: **Riedel, Alfred Dr.**
**Isartorplatz 6**
**D-8000 München 2(DE)**

(54) **Zum Einbalsamieren geeignetes Konservierungsmittel mit Arzneimittelwirkung, Verfahren zu dessen Herstellung und Verwendung desselben.**

(57) Ein zum Einbalsamieren geeignetes Konservierungsmittel mit Arzneimittelwirkung wird hergestellt, indem ein in den Bergen des Yemen auffindbares Gestein bestimmter Zusammensetzung zerkleinert und vermahlen und mit abgekochtem Wasser behandelt und extrahiert wird, worauf das Gemisch nach verschiedenen Standzeiten jeweils filtriert und anschließend im Wasserbad eingedampft wird, wobei zu einem Zeitpunkt, bei dem das konzentrierte Filtrat zu erstarren beginnt, ausgepreßter Aloe-Saft zugesetzt und eingerührt und das nunmehr allmählich erstarrende Produkt isoliert wird.

Das erhaltene Konservierungsmittel, das sich zur Haltbarmachung von Nahrungsmitteln wie z.B. rohem Fleisch und Getreide, eignet, wird von Fachleuten für ein bisher als Geheimrezeptur bezeichnetes, bereits im alten Ägypten bekanntes Einbalsamierungsmittel gehalten.

Überraschenderweise besitzt dieses Konservierungsmittel eine vielseitige Heilwirkung für Mensch und Tier bei innerer und äußerer Anwendung.

## Zum Einbalsamieren geeignetes Konservierungsmittel mit Arzneimittelwirkung, Verfahren zu dessen Herstellung und Verwendung desselben

Die Erfindung betrifft den in den Patentansprüchen angegebenen Gegenstand.

Konservierungsmittel sind seit Alters her von besonderem wirtschaftlichen Interesse und am Spezialgebiet der Einbalsamierung von verstorbenen Menschen und toten Tieren sind auch Wissenschaftler stark interessiert. Eine Art Mumifizierung mit Hilfe von Chemikalien, z.B. Formalin, wird auch heute noch praktiziert und neben den Trocknungsmethoden, die manche Naturvölker kennen oder kannten, beschäftigt die Fachwelt in besonderem Maße die Art der Einbalsamierung, wie sie von den alten Persern, Assyrern und Ägyptern bereits seit dem dritten Jahrtausend vor Christus unter anderem mit Hilfe von Pflanzenharzen und Holzessig, insbesondere aber mit verschiedenen Geheimrezepturen vorgenommen wurde.

Darüber hinaus besteht in den heißen Zonen der Erde ein Interesse an Konservierungsmitteln, mit deren Hilfe die verschiedensten Nahrungsmittel, z.B. rohes Fleisch und Getreidearten, ohne Verwendung von Kühleinrichtungen über lange Zeiträume in einem für den späteren Verzehr geeigneten Zustand gehalten werden können.

Aufgabe der Erfindung ist es, Mittel und Wege anzugeben, mit deren Hilfe ein für die aufgezeigten Zwecke geeignetes Konservierungsmittel geschaffen werden kann.

Der Erfindung liegt die überraschende Erkenntnis zugrunde, daß ein Konservierungsmittel auf der Grundlage des Wasserextrakts einer bestimmten Gesteinsart unter Beimischung des Saftes aus Aloe-Blättern gewonnen werden kann, das überraschender Weise außer den angestrebten Konservierungseigenschaften auch noch eine ausgezeichnete Heilmittelwirkung hat.

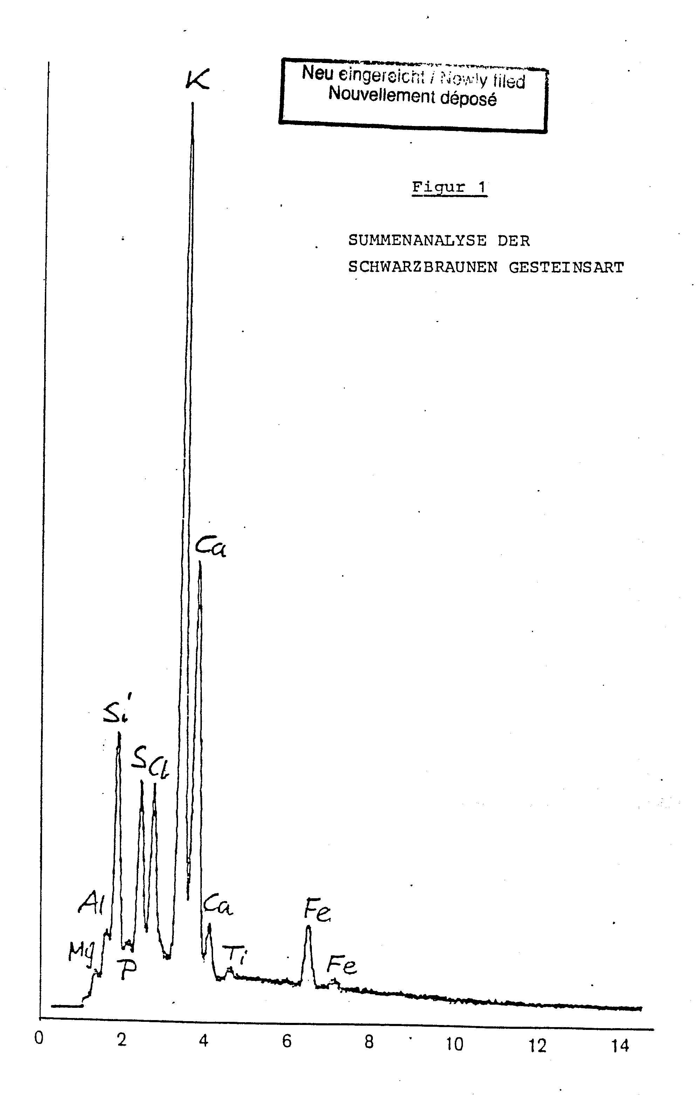

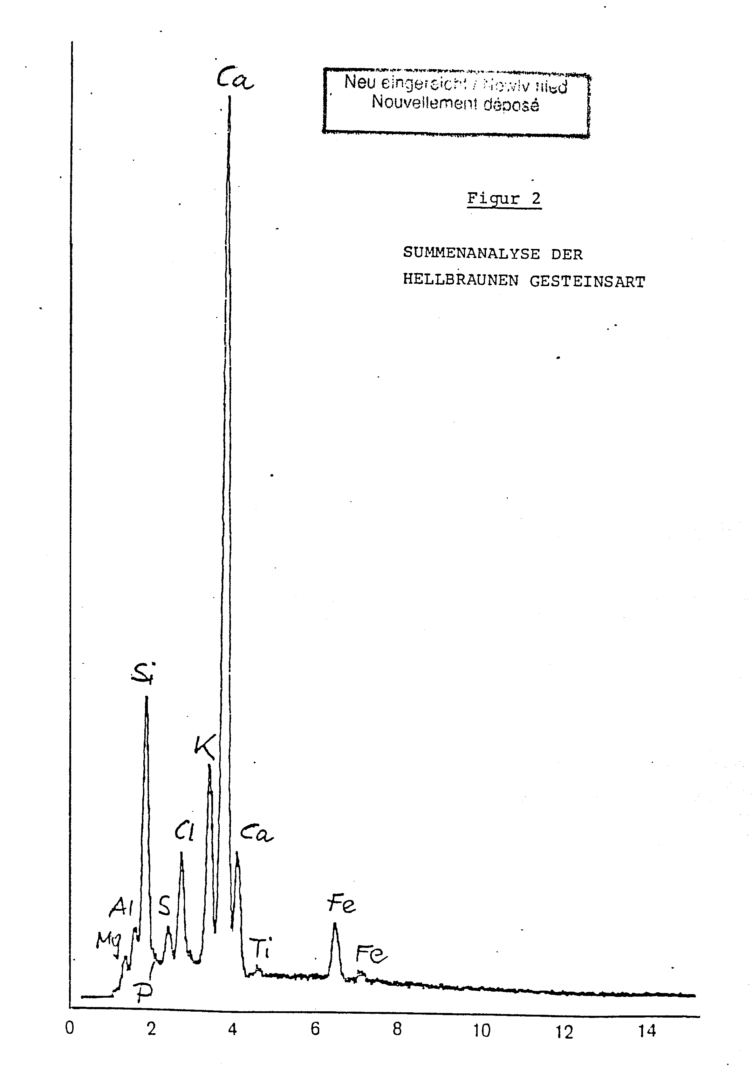

Zur Herstellung dieses Konservierungsmittels wird so vorge gangen, daß man
-ein in den Bergen des Yemen auffindbares, in deutscher Übersetzung als "Schweiß oder Tränen der Berge" bezeichnetes Gestein, dessen nach der Elektronen-angeregten energiedispersen Röntgenspektralanalyse bestimmte durchschnittliche Summenanalyse bei oder zwischen den Werten liegt, die für die schwarzbraune Gesteinsart überwiegend K, deutliche Anteile Ca, Si, S, Cl und kleine Gehalte Fe, Al, Mg, Ti und P und für die hellbraune Gesteinsart überwiegend Ca, deutliche Anteile Si, K, Cl, Fe und kleine Gehalte S, Al, Mg, Ti und P, wie aus den Figuren 1 und 2 ersichtlich, erkennen läßt, zerkleinert und vermahlt,
- das vermahlene Gestein in aufgekochtes und etwa 5 - 15, insbesondere 8 - 10 min abkühlen gelassenes Wasser im Verhältnis von 2 - 3 , insbesondere 2,5 l Wasser pro kg Gestein einbringt,
-das erhaltene Gemisch mit einem Stab, insbesondere Holzstab, 3 - 5, insbesondere 3 Tage lang etwa alle 3 Stunden umrührt,
-danach das Gemisch 12 - 18, insbesondere 13 Tage lang ohne umzurühren stehen läßt und anschließend durch mehrschichtigen, vorzugsweise 5 - 10, insbesondere 7 Schichten aufweisenden Mullstoff in ein offenes Glasgefäß filtriert,
-das erhaltene Gemisch 8 - 12, insbesondere 10 Tage lang stehen läßt und danach wie angegeben filtriert,
-das erhaltene Gemisch weitere 5 - 8, insbesondere 7 Tage lang stehen läßt und danach wie angegeben filtriert und das Filtrieren bis zur Erzielung eines klaren Filtrats wiederholt,
-das im offenen Glasgefäß befindliche Filtrat in ein Wasserbad von etwa 45 - 50, insbesondere 48°C 3 - 7, insbesondere 5 Tage lang einbringt,
-den Gefäßinhalt in ein weiteres Glasgefäß ähnlicher Größe abdekantiert und dieses im Wasserbad, dessen Temperatur auf etwa 43 - 47, insbesondere 46°C erniedrigt wurde, so lange beläßt, bis der Gefäßinhalt zu erstarren beginnt,
-zu diesem Zeitpunkt den Gefäßinhalt mit dem ausgepreßten Saft der fleischigen Blätter der im Yemen wachsenden und dort als "Al-Khira" bezeichneten, zur Gattung der Liliengewächse gehörenden Aloe-Art im Verhältnis von etwa 200 - 280, insbesondere 250 g Saft pro kg Gefäßinhalt versetzt,

-das erhaltene, innerhalb von etwa 2 - 4 Tagen erstarrende Material je nach Bedarf als dünnflüssiges, dickflüssiges, pastenartiges oder steinhartes Verfahrensprodukt isoliert und in geschlossenen Behältern bis zum Gebrauch aufbewahrt.

Bei dem in Yemen als "Schweiß oder Tränen der Berge" bezeichneten Ausgangsmaterial handelt es sich um ein bröckeliges Gestein von - schwarzbrauner bis hellbrauner Farbe, das z.B. in den Bergen des Yemen gefunden wird und das eine nach der Elektronen-angeregten energiedispersen Röntgenspektralanalyse bestimmte durchschnittliche Zusammensetzung aufweist, die bei den für die schwarzbraune Gesteinsart (vgl. Figur 1) oder für die hellbraune Gesteinsart (vgl. Figur 2) gefundenen Werten oder dazwischen liegt.

Die dem Fachmann bekannte Elektronen-angeregten energiedisperse Röntgenspektralanalyse wird z.B. in L. Reimer und G. Pfefferkorn, Raster-Elektronenmikroskopie, Springer-Verlag Berlin, Heidelberg, New York, 1973, Seiten 9, 188, 190 f und 196, sowie in L. Engel und H. Klingele, Rasterelektronen-mikroskopischen Untersuchungen von Metallschäden, Carl Hanser Verlag München, Wien, 2. Auflage 1982, Seiten 16 bis 21, beschrieben. Bei dieser Untersuchungsmethode werden bekanntlich die Elemente mit den Ordnungszahlen 1 bis 11, d.h. die Elemente H bis Na, nicht erfaßt.

Die in den Figuren 1 und 2 wiedergegebenen Ergebnisse wurden unter folgenden Bedingungen erhalten:

Bildschirmvergrößerung, Bilder 10 $\times$ 10 cm : 12

Apertur : 20μm

Winkel zwischen Elektronenstrahl und Probennormale : 0

Anregungsspannung : 30 kV

Gamma : WD 35

Summenanalyse über 8,33 $\times$ 11,66 mm = 97 mm$^2$

Das zerkleinerte und vermahlene Gestein wird in Wasser eingebracht, das aufgekocht und anschließend z.B. 8 min lang abkühlen gelassen wurde, wobei auf 1 kg Gesteinsmaterial beispielsweise 2,5 l abgekochtes Wasser genommen werden. Die Mischung wird mit einem Stab aus vorzugsweise Holz beispielsweise 3 h lang für die Dauer von vorzugsweise 3 Tagen umgerührt. Das Gemisch wird dann beispielsweise 13 Tage ohne umzurühren stehen und absitzen gelassen, worauf durch einen Mullstoff von beispielsweise 7 Schichten filtriert und in ein Glasgefäß abgefüllt wird. Der abfiltrierte Rückstand ist beispielsweise für landwirtschaftliche und Gartenbauzwecke als Düngemittel und insektizides und fungizides Mittel verwendbar.

Nach dem Abgießen in ein Glasgefäß wird das Material nach etwa 10 Tagen erneut filtriert und dieser Vorgang wiederholt sich nach etwa einer weiteren Woche, wobei zu diesem Zeitpunkt solange durch Mullstoff filtriert wird, bis kein weiterer Rückstand verbleibt.

Danach beginnt eine Verfahrensstufe, in der das Wasser aus dem offenen Glasgefäß allmählich verdampft wird, wobei zunächst etwa 5 Tage lang in einem Wasserbad von beispielsweise 48°C und nach dem Abdekantieren in ein anderes Glasgefäß zur Entfernung von erneut gebildetem Niederschlag solange in dem bei einer Temperatur von beispielsweise 46°C gehaltenem Wasserbad erwärmt wird, bis der Gefäßinhalt zu erstarren beginnt.

Zu diesem Zeitpunkt wird die Flüssigkeit, die aus den fleischigen Blättern der in Yemen reichlich wachsenden und dort als "Al-Khira" bezeichneten Aloe-Art, die meist einen etwa 10 - 30 cm hohen verholzten Stamm ausbildet, ausgepreßt wurde, dem wäßrigen Gesteinsextrakt im Verhältnis von beispielsweise 250 g Saft pro kg Gesteinsmaterial unter Rühren zugesetzt. Das erhaltene Gemisch beginnt nunmehr in einem Zeitraum von etwa 2 - 4 Tagen allmählich zu erstarren und kann, je nach Wunsch, als dünnflüssiges, dickflüssiges, pastenartiges oder gesteinsartiges Produkt isoliert und in geschlossenen Gefäßen aufbewahrt werden.

Bezogen auf Trockengewicht ergibt 1 kg Gesteins-Ausgangsmaterial im Durchschnitt eine Ausbeute an reinem Verfahrensprodukt von etwa 180 - 200 g.

Die hervorragenden Konservierungseigenschaften des erfindungsgemäßen Konservierungsmittels wurden durch folgende Beispiele glaubhaft gemacht.

Beispiel 1

Rohes Hammelfleisch wurde in Stücke von etwa 3 $\times$ 3 cm Größe geschnitten und mit dem pastenartigen erfindungsgemäßen Konservierungsmittel in einer Dicke von etwa 0,5 bis 1 cm bestrichen und unter normalen Temperatur-und Wetterbedingungen aufbewahrt. Nach 6 Monaten und 2 Jahren wurden Proben des konservierten Fleisches entnommen, mit lauwarmem Wasser gewaschen, wobei sich das Konservierungsmittel hochgradig entfernen ließ, und in üblicher Weise zubereitet und verzehrt. Die Konsistenz und der Geschmack des Fleisches waren einwandfrei.

Beispiel 2

Weizenkörner wurden in eine Kiste mit den ungefähren Ausmaßen 50 $\times$ 30 $\times$ 30 cm, die durch eine sich in Längsrichtung erstreckende Zwischenwand unterteilt war und deren Innenwände in einer Stärke von etwa 0,5 - 1 cm mit dem erfindungsgemäßen Konservierungsmittel bestrichen waren, eingebracht und unter normalen Temperaturbedingungen 2 Jahre lang darin aufbewahrt. Danach wurde das Getreide in üblicher Weise zu Backwaren verarbeitet. Farbe und Geschmack des Produktes waren einwandfrei.

Aufgrund der erhaltenen Ergebnisse gehen fachkundige Wissenschaftler davon aus, daß es sich beim erfindungsgemäßen Konservierungsmittel um eines der bereits vor Jahrtausenden angewandten Mittel zur Einbalsamierung, die als "nach geheimen Rezepten hergestellt" eingestuft wurden, handelt.

Überraschenderweise entfaltet das erfindungsgemäße Konservierungsmittel auch eine vielseitige Heilwirkung und kann daher als Arzneimittel für inneren und äußeren Gebrauch mit Erfolg angewandt werden. Für die äußere Anwendung bietet sich z.B. die Behandlung von Lippen-, Augen-und Schleimhautentzündungen, Schwellungen, Juckreiz und offenen Wunden an, und für die innere Anwendung hat sich unter anderem die Behandlung von Magen-und Darmerkrankungen des verschiedensten Typs bewährt.

## Ansprüche

1. Verfahren zur Herstellung eines zum Einbalsamieren geeigneten Konservierungsmittels mit Arzneimittelwirkung, dadurch gekennzeichnet, daß man

-ein in den Bergen des Yemen auffindbares, in deutscher Übersetzung als "Schweiß oder Tränen der Berge" bezeichnetes Gestein, dessen nach der Elektronen-angeregten energiedispersen Röntgenspektralanalyse bestimmte durchschnittliche Summenanalyse bei oder zwischen den Werten liegt, die für die schwarzbraune Gesteinsart überwiegend K, deutliche Anteile Ca, Si, S, Cl und kleine Gehalte Fe, Al, Mg, Ti und P und für die hellbraune Gesteinsart überwiegend Ca, deutliche Anteile Si, K, Cl, Fe und kleine Gehalte S, Al, Mg, Ti und P, wie aus den Figuren 1 und 2 ersichtlich, erkennen läßt, zerkleinert und vermahlt,

-das vermahlene Gestein in aufgekochtes und etwa 5 - 15, insbesondere 8 - 10 min abkühlen gelassenes Wasser im Verhältnis von 2 - 3, ins besondere 2,5 l pro kg Gestein einbringt,

-das erhaltene Gemisch mit einem Stab, insbesondere Holzstab, 3 - 5, insbesondere 3 Tage lang etwa alle 3 Stunden umrührt,

-danach das Gemisch 12 - 18, insbesondere 13 Tage lang ohne umzurühren stehen läßt und anschließend durch mehrschichtigen, vorzugsweise 5 - 10, insbesondere 7 Schichten aufweisenden Mullstoff in ein offenes Glasgefäß filtriert,

-das erhaltene Gemisch 8 - 12, insbesondere 10 Tage lang stehen läßt und danach wie angegeben filtriert,

-das erhaltene Gemisch weitere 5 - 8, insbesondere 7 Tage lang stehen läßt und danach wie angegeben filtriert und das Filtrieren bis zur Erzielung eines klaren Filtrats wiederholt,

-das im offenen Glasgefäß befindliche Filtrat in ein Wasserbad von etwa 45 - 50, insbesondere 48° C 3 - 7, insbesondere 5 Tage lang einbringt,

-den Gefäßinhalt in ein weiteres Glasgefäß ähnlicher Größe abdekantiert und dieses im Wasserbad, dessen Temperatur auf etwa 43 - 47, insbesondere 46° C erniedrigt wurde, so lange beläßt, bis der Gefäßinhalt zu erstarren beginnt,

-zu diesem Zeitpunkt den Gefäßinhalt mit dem ausgepreßten Saft der fleischigen Blätter der im Yemen wachsenden und dort als "Al-Khira" bezeichneten, zur Gattung der Liliengewächse gehörenden Aloe-Art im Verhältnis von etwa 200 - 280, insbesondere 250 g Saft pro kg Gefäßinhalt versetzt,

-das erhaltene , innerhalb von etwa 2 - 4 Tagen erstarrende Material je nach Bedarf als dünnflüssiges, dickflüssiges, pastenartiges oder steinhartes Verfahrensprodukt isoliert und in geschlossenen Behältern bis zum Gebrauch aufbewahrt.

2. Zum Einbalsamieren verwendbares Konservierungsmittel mit Arzneimittelwirkung, herstellbar nach Auspruch 1.

3. Verwendung des Konservierungsmittel nach Anspruch 2 zum Einbalsamieren von Körperteilen, Konservieren von Nahrungsmitteln und als Arzneimittel zur inneren und äußeren Anwendung.

Figur 1

SUMMENANALYSE DER
SCHWARZBRAUNEN GESTEINSART

Figur 2

SUMMENANALYSE DER
HELLBRAUNEN GESTEINSART